# EUROPEAN PATENT SPECIFICATION

(11) **EP 3 041 702 B1**
(45) Date of publication and mention of the grant of the patent: **06.11.2019**
(21) Application number: 14758154.0
(22) Date of filing: 02.09.2014
(51) Int. Cl.: B60K 37/06

(54) **INSTRUMENTS 3D DISPLAY SYSTEM**
3D-ANZEIGESYSTEM FÜR INSTRUMENTE
SYSTÈME D'AFFICHAGE 3D D'INSTRUMENTS

(30) Priority: 03.09.2013 GB 201315620
(43) Date of publication of application: 13.07.2016
(73) Proprietor: Jaguar Land Rover Limited, Coventry, Warwickshire CV3 4LF (GB)
(72) Inventor: HASEDZIC, Elvir, Coventry Warwickshire CV3 4LF (GB); SKRYPCHUK, Lee, Coventry Warwickshire CV3 4LF (GB)
(74) Representative: Holmes, Matthew William
(86) International application number: PCT/EP2014/068634
(87) International publication number: WO 2015/032766

(56) References cited:
- DE-A1-102004 055 835
- KR-A- 20120 091 492

## Description

### TECHNICAL FIELD

The present disclosure relates to an instrument display panel for a motor vehicle, to an instrument display system incorporating such a panel, to a motor vehicle incorporating such a system, and to a method of displaying information on such an instrument display panel. Aspects of the invention relate to a panel, to a system, to a method and to a vehicle.

### BACKGROUND OF THE INVENTION

A conventional instrument panel is constituted by a plurality of gauges, such as a speedometer, a tachometer, a fuel gauge, a rev counter, an engine temperature gauge, one or more warning lights (such as a battery charge indicator, an ABS warning light, a tyre pressure warning light and an engine malfunction warning light).

Recently, there has been developed a fully digital instrument display panel that uses computer graphics to present all information, such as a speedometer, on a TFT LCD panel. Use of computer graphics helps realise a flexible instrument panel that displays information only when necessary or enables different colours to be used during daytime and night-time operation.

A problem identified with known instrument panels is prioritising the displayed information. This problem is particularly relevant when a large amount of information is displayed on the instrument panel, none of which is prioritised. Consequently, it is relatively common for a driver not to notice information which requires urgent attention, for example information relating to the over-heating of the engine, or dangerous proximity to a vehicle in front, or an obstruction behind. Conventional approaches to this problem include increasing the relative size of the displayed information or flashing the information. However, there are certain legislative requirements which limit the ability to prioritise information on a conventional display. For example, in many jurisdictions there legislation requires that certain data remains available at all times, for example icons cannot overlie the speedometer.

The document DE 10 2005 055835 A1 describes a two-dimensional display device having two or more planes combined with each other. KR 2012 0091492 A relates to navigational apparatus including a stereoscopic display device for displaying 3D navigation images similar to an actual view ahead of a vehicle.

At least in certain embodiments, the present invention seeks to provide an instrument display panel that facilitates prioritisation of the information displayed.

### SUMMARY OF THE INVENTION

Aspects of the present invention relate to an instrument display panel for a motor vehicle, to an instrument display system incorporating such a panel, to a motor vehicle incorporating such a system, and to a method of displaying information on such an instrument display panel.

According to an aspect of the invention there is provided a system comprising a 3-D instrument display panel configured to display infographics associated with parameters of a motor vehicle and to define a plurality of virtual display planes positioned at different apparent depths within the display panel. The 3-D display is an autostereoscopic parallax display which emits directionally-varying image information to present a 3-D image to a user. The system comprises an electronic control unit programmed to position each of the infographics at an apparent depth within the 3-D instrument display panel dependent on their priority, wherein higher priority infographics are displayed at negative parallax positions and lower priority infographics are displayed at positive parallax positions. A first infographic comprises a speedometer of the motor vehicle, the electronic control unit being programmed to position the first infographic in a first apparent display plane. The electronic control unit is programmed so that infographics of one or more critical parameters are normally displayed in apparent display planes having a greater apparent depth than the first apparent display plane. The electronic control unit is programmed to choose an infographic of highest priority in dependence upon information received by the electronic control unit as to which of any one of the one or more critical parameters is faulty or does not comply with a predetermined value or range of values. The electronic control unit is programmed to position the infographic of highest priority in an apparent display plane in front of the first apparent display plane without obscuring the user's view of the speedometer infographic.

The apparent depth at which each of said infographics is positioned within the 3-D display can be reduced (i.e. the infographic appears closer to the front of the 3-D instrument display panel resulting in a decrease in the apparent distance between the infographic and a user positioned in front of the display panel) to represent a higher priority. The apparent depth at which each of said infographics is positioned within the 3-D display can be increased (i.e. the infographic appears closer to the back of the 3-D instrument display panel resulting in an increase in the apparent distance between the infographic and a user positioned in front of the display panel) to represent a lower priority. The electronic control unit can be dynamically configurable to display each infographic at a relative apparent depth within the 3-D display which is indicative of the relative priority of the operating parameters associated with that infographic. The electronic control unit can be programmed to position the infographics associated with parameters of higher priority towards the apparent front of the 3-D instrument display panel. Conversely, the electronic control unit can be programmed to position the infographics associated with operating parameters of lower priority towards the apparent rear of the 3-D instrument display panel.

The apparent distance from a user to the displayed infographics varies depending on the apparent depth at which the infographic is displayed in the 3-D display.

The first apparent display plane can function as a reference plane within the 3-D display.

Higher priority infographics can be displayed in one or more apparent display planes disposed at a reduced apparent depth than the first apparent display plane. Conversely, the electronic control unit can be programmed to position the lower priority infographics for displayed in one or more apparent display planes disposed at an increased apparent depth than the first apparent display plane.

The electronic control unit can be programmed to position an infographic associated with a parameter of highest priority in a predetermined apparent display plane at an apparent frontmost position within the 3-D display. The infographic can be displayed in said frontmost position without obscuring the user's view of the speedometer infographic. The electronic control unit can be programmed to position an infographic associated with a parameter of lowest priority in a predetermined apparent display plane at an apparent rearmost position within the 3-D display.

The relative priority of the operating parameters can be predefined, for example the apparent plane defined for each infographic can be stored in a look-up table. The electronic control unit can be programmed to change the apparent plane in which an infographic is displayed (to increase or decrease the apparent depth) based on said information. The information can, for example, indicate that a priority indicator associated with a particular infographic has changed and the electronic control unit can be programmed to make a corresponding change to the apparent plane in which that infographic is displayed.

The infographic can be displayed in a single apparent display plane. Alternatively, the infographic for a particular parameter can be moved between apparent display planes, for example to represent changing status information. For example, the apparent display plane in which the infographic is displayed can be changed depending on operating data relating to the associated parameter. The electronic control unit can be configured to reduce the apparent depth of the plane in which the infographic is displayed when operating data determines that action is required. Conversely, the electronic control unit can be configured to increase the apparent depth of the plane in which the infographic is displayed when operating data determines that action is not required. The electronic control unit can be programmed so that the infographics of critical parameters are normally displayed in an apparent background plane (for example an apparent display plane further from the user than the first apparent display plane containing the speedometer infographic), but each can be moved to an apparent foreground plane (for example an apparent display plane closer to the user than the first apparent display plane containing the speedometer infographic) when the associated critical parameter is faulty or does not comply with a predetermined value or range of values.

The critical parameters can relate to one or more of the following: a tyre pressure warning, an ABS faulty warning, and an engine malfunction warning. The critical parameters can also include inter alia, a reversing warning indicator, a warning that the speed limit is being exceeded, and a warning that a seat belt is not being worn by an occupant of the motor vehicle.

In embodiments, the 3-D display can include a holographic display or a 3-D head-up display (HUD). The higher priority infographics can be displayed at negative parallax positions and lower priority infographics can be displayed at positive parallax positions.

In a further aspect, the present invention relates to a motor vehicle incorporating an instrument display system as defined above.

The motor vehicle can further comprise means for sending warning information to the electronic control unit to identify which of a plurality of critical parameters is faulty or does not comply with a predetermined value or range of values. The sending means can be in the form of a transmitter, for example coupled to a notification centre.

According to another aspect of the invention there is provided a method of displaying infographics associated with parameters of a motor vehicle. The method comprises displaying infographics associated with parameters of a motor vehicle on a 3-D instrument display panel, wherein the 3-D display is an autostereoscopic parallax display which emits directionally-varying image information to present a 3-D image to a user. The method comprises defining a plurality of virtual display planes positioned at different apparent depths within the display panel. The method comprises programming an electronic unit to position each of the infographics at an apparent depth within the 3-D instrument display panel dependent on their priority, wherein higher priority infographics are displayed at negative parallax positions and lower priority infographics are displayed at positive parallax positions. A first infographic comprises a speedometer of the motor vehicle. The method comprises programming the electronic control unit to position the first infographic in a first apparent display plane. The method comprises programming the electronic control unit so that infographics of one or more critical parameters are normally displayed in apparent display planes having a greater apparent depth than the first apparent display plane. The method comprises programming the electronic control unit to choose an infographic of highest priority in dependence upon information received by the electronic control unit as to which of any one of the one or more critical parameters is faulty or does not comply with a predetermined value or range of values. The method comprises programming the electronic unit to position an infographic of highest priority in an apparent display plane in front of the first apparent display plane without obscuring the user's view of the speedometer infographic.

The term 3-D has been used herein as an abbreviation of the term three (3) dimensional. As determined by the context in which the term is used herein, this refers to the display of a graphical image (or images) in three dimensions or a display apparatus suitable for displaying graphical images in three dimensions.

Within the scope of this application it is expressly envisaged that the various aspects, embodiments, examples and alternatives set out in the preceding paragraphs, in the claims and/or in the following description and drawings, and in particular the individual features thereof, can be taken independently or in any combination. Features described in connection with one embodiment are applicable to all embodiments, unless such features are incompatible

### BRIEF DESCRIPTION OF THE DRAWINGS

An embodiment of the present invention will now be described, by way of example only, with reference to the accompanying drawings, in which:
Figure 1 is a schematic view of a motor vehicle incorporating an instrument display panel; and
Figure 2 is a schematic representation of the 3-D display of the panel of Figure 1.

### DETAILED DESCRIPTION OF AN EMBODIMENT

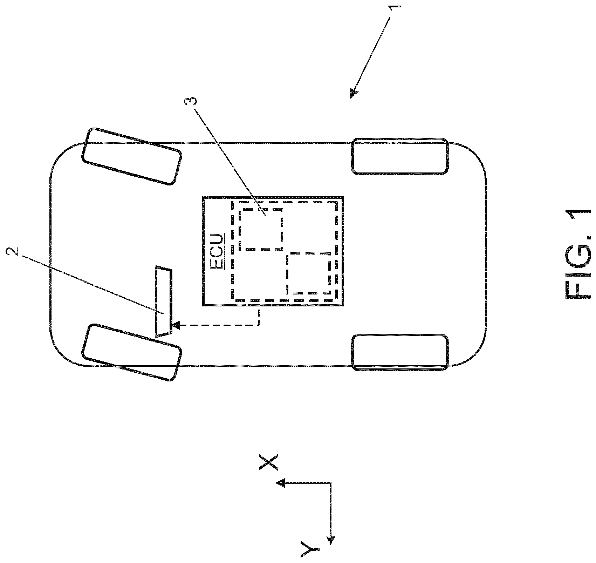

Referring to the drawings, Figure 1 shows a motor vehicle 1 having an indicator display panel 2 and an electronic control unit (ECU) 3. The ECU 3 is software controlled to send infographics (graphic visual representations of information, data or knowledge intended to present complex information quickly and clearly) to the panel 2.

The ECU 3 can be part of the same assembly as the panel 2 or it can be located somewhere within the vehicle detached from the panel 2. The panel 2 is an autostereoscopic display panel which presents a three-dimensional image to a viewer without the need for glasses or other encumbering viewing aids. The autostereoscopic display is a parallax display which emits directionally-varying image information into the viewing zone. The 3-D autostereoscopic display technology typically generates a 2-D image to each eye, in order to provide the user with depth information of the infographics. In particular, the infographics in the parallax space can be used to prioritise the level of priority/urgency of warning or information to the user under software control by the ECU 3. Parallax is a displacement or difference in the apparent position of an object viewed along two different lines of sight, and is measured by the angle or semi-angle of inclination between those two lines. Thus, with positive parallax: objects appear behind the screen (increased apparent depth); and with negative parallax: objects appear in front of the screen (reduced apparent depth).

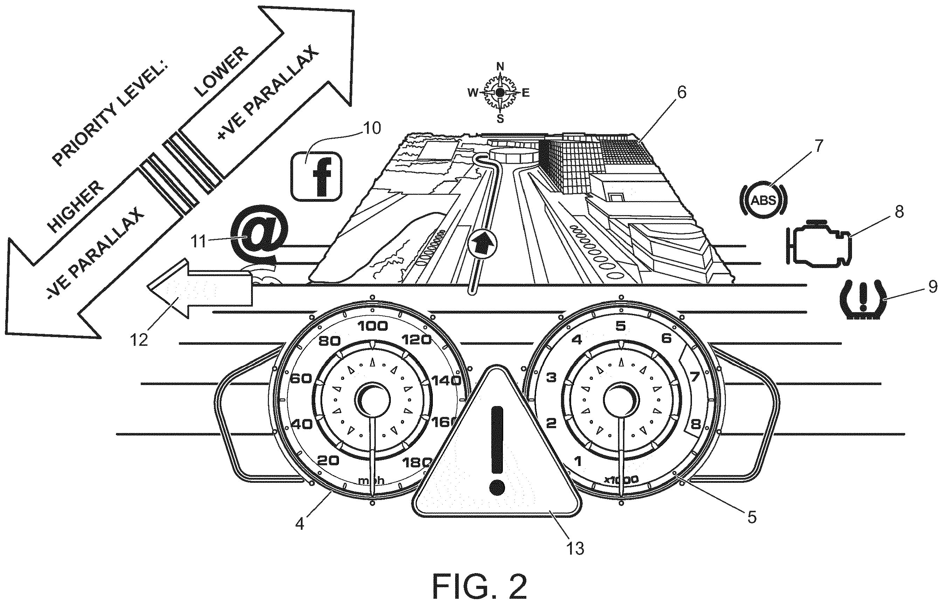

Consequently, as shown in Figure 2, the panel 2 displays information at different priority levels and in different planes in the 3-D virtual space, the higher the priority the more negative the parallax, and the lower the priority the more positive the parallax. The 3-D virtual space is represented schematically in Figure 2 by a series of horizontal lines corresponding to apparent planes within the image having different parallax values.

The display panel shows a speedometer 4, a rev counter 5 (both positioned at a relatively high priority level defined by the apparent plane in the parallax space second nearest to the user), a map 6 of the road ahead, and various infographics such as an ABS warning 7, an engine malfunction warning 8, and a tyre pressure warning 9 (all at relatively low priority levels), and other infographics such as a first icon 10 for accessing Facebook, a second icon 11 (the @ sign) for accessing the internet/emails, and a third icon 12 (an arrow) for warning that an indicator light is flashing. The highest priority infographic (indicated by an exclamation mark) 13 is positioned in the apparent plane nearest to the user, in front of and between the speedometer 4 and the rev counter 5, and provides a location for any urgent warning to the user. For example, if the ABS is faulty, the ABS icon 7 will be displayed as the highest priority infographic 13 without, however, obscuring either the speedometer 4 or the rev counter 5. The map 6 can be generated by a satnav unit, or from a database such as Google Maps.

The higher priority warnings are, therefore, located in the higher negative parallax distance with respect to the less urgent information, the higher the negative parallax that an infographic occupies, the closer it is perceived by a user, being positioned in a plane closer to the user. Similarly, the relative position of external objects with respect to the vehicle can be denoted by longitudinal position of indications in the image space.

The visual information that is fed to the user is sourced from the ECU 3, and it is channeled through to the 3-D autostereoscopic display panel 2. The 3-D autostereoscopic display system can sort out or prioritise the information received from the ECU 3, thus giving a level of ranking to how the information will be perceived by the user, and as such safety critical information will have the higher ranking than the infotainment information such as internet/emails and Facebook entries. The ECU 3 is programmed to prioritise safety critical information to be displayed at the highest priority infographic position 13.

The display panel 2 not only provides the user with additional depth information or infographics prioritisation, but enables the user to act on the information faster, or to enable the vehicle to communicate the information to the user more efficiently.

The main advantage of the system described above is that, by relaying the information in order of importance using parallax, the user can receive the important information faster and act upon it in a most efficient manner. Consequently, the time a user takes to respond to a safety critical warning is decreased.

If the motor vehicle 1 is fitted with cameras at the front and/or at the rear, the 3-D display technology could be used to represent the relative positions of external objects with respect to the vehicle. This information can be used by the driver to see out of line of sight objects around the vehicle. This enhances the level of information used by the 3-D display to give a perception of depth and distance with respect to the vehicle of nearby objects. The 3-D display system can, therefore, pre-build a virtual 3-D scene of all vehicles or objects around the driver's vehicle on the motorway for example, thus giving a driver a spatial relation of the vehicle position with respect to other vehicles; information that the driver can receive with a single glance on the 3-D display.

Using a 2-D display, the distance between vehicles can only be represented in a plan view. A 3-D image can, however, display the same information more intuitively by moving the relative position of the infographics within the 3-D virtual space. The 3-D image places a reduced cognitive load on the user.

As mentioned above, a conventional 2-D display has certain limitations regarding the display of icons and warning notifications. In particular, legislation requires that certain data remains available at all times - for example, icons cannot overlie the speedometer. The use of a 3-D display allows additional information to be displayed without obfuscating underlying information. For example, an icon can be displayed in the foreground of the image (at 13) to highlight its importance without relying exclusively on the size of the icon.

A 3-D display image offers faster perception and can reduce the response time required to perform an action, for example to respond to an engine warning notification. The invention relies on the increased depth perception of the 3-D image to highlight the urgency of messages. The information is displayed within the 3-D virtual space depending on its importance. The technical terminology for the virtual space is 'parallax' and is measured in dioptres.

The parallax depth of a given object in the display is related to its relative priority. By adjusting the parallax for different objects, it is possible to emphasise certain parts of the image and to de-emphasise other parts. One option is to display parts of the image in 3-D whilst the remainder of the image is displayed in a single plane in the parallax space. Alternatively, the non-critical infographics such as Facebook (TM) and internet/emails could permanently be positioned at a low priority level (high positive parallax plane).

The prominence of objects in the 3-D image could be fixed (for example, the location of the display objects in the virtual space can be specified by the manufacturer); or could be modified dynamically (for example, the user could reconfigure the location of display objects; or display objects could be moved within the virtual space to provide additional emphasis).

It will be apparent, that the display system described above could be modified. For example, many other sorts of infographics (such as a reversing warning indicator) could be incorporated. In that case, the normal audible warning could be enhanced by a display at 13 of the actual distance of an object behind the reversing vehicle. It would also be possible for the apparent depths of the infographics to be pre-defined (for example the locations of the infographics in the virtual 3-D display space could be specified by the manufacturer) or modified dynamically (for example, the user could reconfigure the locations of the infographics, or infographics could be moved within the virtual 3-D space to provide additional emphasis).

A further modification would be to perform parallax scrolling of the infographics displayed in different apparent planes, for example based on the position of the user's head. A tracking system, such as an optical tracking apparatus, could be provided to track the position of the user's head.

Although the display system has been described above in connection with a motor vehicle, it will be apparent that it could be used with other forms of transport such as aircraft (civil or military) or other military vehicles, or with any other system that requires information to be presented to a user in as user-friendly manner as possible.

The specification of the Applicant's co-pending GB patent application (identified by our reference B-446) filed on the same date as this application relates to an instrument display system for a motor vehicle, the system having a 3-D instrument display panel, a programmable electronic control unit, and a camera at the front and/or the rear of the motor vehicle, the system being such that, in use, the display panel shows a 3-D image of the view at the front and/or the rear of the vehicle.

A further development of the system described herein would be to implement a spirit level and/or compass to facilitate off-road driving. A dynamic event countdown could be provided to provide a countdown based on navigation distance (for example a bar or gauge). A still further development would be to provide a traffic sign recognition warning, for example displayed in 3-D space to provide feedback on the position of the vehicle relative to the traffic sign (such as a turning or a speed sign).

## Claims

1. A system, comprising:
an instrument display panel configured to display infographics associated with parameters of a motor vehicle; and,
an electronic control unit programmed to position each of the infographics within the instrument display panel,
**characterised in that**,
the instrument display panel includes a 3-D autostereoscopic parallax display which emits directionally-varying image information to present a 3-D image to a user, and the instrument display panel is configured to define a plurality of virtual display planes positioned at different apparent depths within the display panel; and,
the electronic control unit is programmed to position each of the infographics at an apparent depth within the instrument display panel dependent on their priority, wherein higher priority infographics are displayed at negative parallax positions and lower priority infographics are displayed at positive parallax positions,
wherein a first infographic comprises a speedometer of the motor vehicle, the electronic control unit being programmed to position the first infographic in a first apparent display plane,
wherein the electronic control unit is programmed so that infographics of one or more critical parameters are normally displayed in apparent display planes having a greater apparent depth than the first apparent display plane,
wherein the electronic control unit is programmed to choose an infographic of highest priority in dependence upon information received by the electronic control unit as to which of any one of the one or more critical parameters is faulty or does not comply with a predetermined value or range of values, and wherein the electronic control unit is programmed to position the infographic of highest priority in an apparent display plane in front of the first apparent display plane having a lesser apparent depth than the first apparent display plane without obscuring the user's view of the speedometer infographic.

2. A system as claimed in claim 1, wherein the electronic control unit is programmed to position the infographics associated with parameters of higher priority towards the apparent front of the 3-D instrument display panel.

3. A system as claimed in any one of the preceding claims, wherein higher priority infographics are displayed in one or more apparent planes closer to the user than the first apparent display plane.

4. A system as claimed in any previous claim, wherein the critical parameter relates to one or more of the following: a tyre pressure warning, an ABS faulty warning, and an engine malfunction warning.

5. A motor vehicle incorporating a system as claimed in any one of the preceding claims.

6. A motor vehicle as claimed in claim 5, further comprising means for sending warning information to the electronic control unit to identify which of a plurality of critical parameters is faulty or does not comply with a predetermined value or range of values.

7. A method of displaying infographics associated with parameters of a motor vehicle, the method comprising:
displaying infographics associated with parameters of a motor vehicle on an instrument display panel including a 3-D autostereoscopic parallax display which emits directionally-varying image information to present a 3-D image to a user;
defining a plurality of virtual display planes positioned at different apparent depths within the display panel; and,
programming an electronic unit to position each of the infographics at an apparent depth within the 3-D instrument display panel dependent on their priority, wherein higher priority infographics are displayed at negative parallax positions and lower priority infographics are displayed at positive parallax positions,
wherein a first infographic comprises a speedometer of the motor vehicle, and the method further comprising:
programming the electronic control unit to position the first infographic in a first apparent display plane,
programming the electronic control unit so that infographics of one or more critical parameters are normally displayed in apparent display planes having a greater apparent depth than the first apparent display plane,
programming the electronic control unit to choose an infographic of highest priority in dependence upon information received by the electronic control unit as to which of any one of the one or more critical parameters is faulty or does not comply with a predetermined value or range of values, and
programming the electronic unit to position an infographic of highest priority in an apparent display plane in front of the first apparent display plane having a lesser apparent depth than the first apparent display plane without obscuring the user's view of the speedometer infographic.

8. A method as claimed in claim 7, further comprising the step of programming the electronic unit to position an infographic in the highest priority position apparently nearest the user in dependence upon information received by the electronic control unit as to which one of a plurality of critical parameters is faulty or does not comply with a predetermined value or range of values, said infographic being associated with said one critical parameter.

## Patentansprüche

1. System, Folgendes umfassend:
ein Instrumentenanzeigefeld, das für das Anzeigen von Infografiken konfiguriert ist, die Parametern eines Kraftfahrzeugs zugeordnet sind; und,
eine elektronische Steuereinheit, die programmiert ist, um jede der Infografiken innerhalb des Instrumentenanzeigefelds anzuordnen, **dadurch gekennzeichnet, dass** das Instrumentenanzeigefeld eine autostereoskopische 3D-Parallaxenanzeige enthält, die richtungswechselnde Bildinformationen ausgibt, um einem Benutzer ein 3D-Bild anzuzeigen, und dass die Instrumentenanzeigetafel dafür konfiguriert ist, mehrere virtuelle Anzeigeebenen zu definieren, die in unterschiedlichen scheinbaren Tiefen innerhalb der Anzeigetafel angeordnet sind; und,
wobei die elektronische Steuereinheit programmiert ist, um jede der Infografiken in Abhängigkeit von ihrer Priorität in einer scheinbaren Tiefe innerhalb des Instrumentenanzeigefelds anzuordnen, wobei die Infografiken mit höherer Priorität an negativen und Infografiken mit niedrigerer Priorität an positiven Parallaxenpositionen angezeigt werden, wobei eine erste Infografik einen Tachometer des Kraftfahrzeugs umfasst, wobei die elektronische Steuereinheit programmiert ist, um die erste Infografik in einer ersten sichtbaren Anzeigeebene anzuordnen, wobei die elektronische Steuereinheit derart programmiert ist, dass die Infografiken eines oder mehrerer kritischer Parameter(s) normalerweise in sichtbaren Anzeigeebenen mit einer größeren scheinbaren Tiefe als die erste scheinbare Anzeigeebene angezeigt werden, wobei die elektronische Steuereinheit programmiert ist, um eine Infografik mit höchster Priorität in Abhängigkeit von den von der elektronischen Steuereinheit empfangenen Informationen zu wählen, wobei die Informationen angeben, ob ein oder mehrere kritische Parameter fehlerhaft sind oder ob diese nicht mit einem vorbestimmten Wert oder Bereich von Werten übereinstimmen, und wobei die elektronische Steuereinheit programmiert ist, um die Infografik mit der höchsten Priorität in einer sichtbaren Anzeigeebene vor der ersten sichtbaren Anzeigeebene mit einer geringeren sichtbaren Tiefe als der ersten sichtbaren Anzeigeebene anzuordnen, ohne die Sicht des Benutzers auf die Infografik des Geschwindigkeitsmessers zu beeinträchtigen.

2. System nach Anspruch 1, wobei die elektronische Steuereinheit programmiert ist, um die Infografiken, die den Parametern höherer Priorität zugeordnet sind, in Richtung der scheinbaren Vorderseite des 3D-Instrumentenanzeigefelds anzuordnen.

3. System nach einem der vorhergehenden Ansprüche, wobei Infografiken mit höherer Priorität in einer oder mehreren scheinbaren Ebenen angezeigt werden, die dem Benutzer scheinbar näher sind, als die erste scheinbare Anzeigeebene.

4. System nach einem der vorhergehenden Ansprüche, wobei sich der kritische Parameter auf eine oder mehrere der Folgenden bezieht:
eine Reifendruckwarnung, eine ABS-Fehlerwarnung und eine Motorstörungswarnung.

5. Kraftfahrzeug mit einem System nach einem der vorhergehenden Ansprüche.

6. Kraftfahrzeug nach Anspruch 5, ferner umfassend Mittel zum Senden von Warninformationen an die elektronische Steuereinheit, um zu identifizieren, welcher von mehreren kritischen Parametern fehlerhaft ist oder einem vorbestimmten Wert oder Wertebereich nicht entspricht.

7. Verfahren zum Anzeigen von Infografiken, die Parametern eines Kraftfahrzeugs zugeordnet sind, wobei das Verfahren Folgendes umfasst:
Anzeigen von Infografiken, die den Parametern eines Kraftfahrzeugs auf einer Instrumententafel zugeordnet sind, die eine autostereoskopische 3D-Parallaxenanzeige enthält, die richtungswechselnde Bildinformationen ausgibt, um einem Benutzer ein 3D-Bild anzuzeigen;
Definieren mehrerer virtueller Anzeigeebenen, die in unterschiedlichen scheinbaren Tiefen innerhalb des Anzeigefelds angeordnet sind; und,
Programmieren einer elektronischen Einheit zum Anordnen jeder der Infografiken in einer scheinbaren Tiefe innerhalb des 3D-Instrumentenanzeigefelds in Abhängigkeit von ihrer Priorität, wobei Infografiken mit höherer Priorität an negativen und Infografiken mit niedrigerer Priorität an positiven Parallaxenpositionen angezeigt werden, wobei eine erste Infografik einen Geschwindigkeitsmesser des Kraftfahrzeugs umfasst, und das Verfahren ferner Folgendes umfasst:
Programmieren der elektronischen Steuereinheit, um die erste Infografik in einer ersten sichtbaren Anzeigeebene anzuordnen,Programmieren der elektronischen Steuereinheit, um die Infografiken eines oder mehrerer kritischer Parameter normalerweise in scheinbaren Anzeigeebenen mit einer größeren scheinbaren Tiefe als die erste scheinbare Anzeigeebene anzuzeigen, Programmieren der elektronischen Steuereinheit, um eine Infografik mit höchster Priorität in Abhängigkeit von den von der elektronischen Steuereinheit empfangenen Informationen zu wählen, wobei die Informationen angeben, ob ein oder mehrere kritische Parameter fehlerhaft sind oder ob diese nicht mit einem vorbestimmten Wert oder Bereich von Werten übereinstimmen, und Programmieren der elektronischen Steuereinheit, um die Infografik mit der höchsten Priorität in einer sichtbaren Anzeigeebene vor der ersten sichtbaren Anzeigeebene mit einer geringeren sichtbaren Tiefe als der ersten sichtbaren Anzeigeebene anzuordnen, ohne die Sicht des Benutzers auf die Infografik des Geschwindigkeitsmessers zu beeinträchtigen.

8. Verfahren nach Anspruch 7, ferner umfassend den Schritt des Programmierens der elektronischen Einheit, um in Abhängigkeit von Informationen, die von der elektronischen Steuereinheit empfangen werden, eine Infografik in der Position mit der höchsten Priorität anzuordnen, die dem Benutzer scheinbar am nächsten ist, wobei die Informationen angeben, ob ein oder mehrere kritische Parameter fehlerhaft sind oder ob diese nicht mit einem vorbestimmten Wert oder Bereich von Werten übereinstimmen, wobei die Infografik dem einen kritischen Parameter zugeordnet ist.

## Revendications

1. Système, comprenant :
un tableau de bord configuré pour afficher les infographies associées aux paramètres d'un véhicule automobile ; et,
une unité de commande électronique programmée pour positionner chacun des infographies à l'intérieur du tableau de bord, **caractérisée en ce que**,
l'écran d'affichage du tableau de bord comprend un écran parallaxe autostéréoscopique tridimensionnel qui émet des informations d'image variant selon la direction pour présenter une image tridimensionnelle à un et le panneau d'affichage de l'instrument est configuré pour définir une pluralité de plans d'affichage virtuel positionnés à différentes profondeurs apparentes dans le panneau d'affichage ; et,
l'unité de commande électronique est programmée pour positionner chacun des infographes à
une profondeur apparente à l'intérieur de l'écran d'affichage du tableau de bord en fonction de leur priorité, dans lequel des infographies de priorité plus élevée sont affichées aux positions de parallaxe négatives et des infographies de priorité plus faible sont affichées aux positions de parallaxe positives,
dans laquelle une première infographie comprend un indicateur de vitesse du véhicule automobile, l'unité de commande électronique étant programmée pour positionner la première infographie dans un premier plan d'affichage apparent,
dans laquelle l'unité de commande électronique est programmée de telle sorte que l'infographie d'un ou de plusieurs des éléments suivants
des paramètres plus critiques sont normalement affichés dans des plans d'affichage apparents ayant une profondeur apparente supérieure à celle du premier plan d'affichage apparent,
dans laquelle l'unité de commande électronique est programmée pour choisir un infographique de priorité la plus élevée en fonction des informations reçues par l'unité de commande électronique.
d'un ou de plusieurs paramètres critiques est défectueux ou ne respecte pas une valeur ou une plage de valeurs prédéterminées, et
dans laquelle l'unité de commande électronique est programmée pour positionner l'infographie de priorité la plus élevée dans un plan d'affichage apparent devant le premier plan d'affichage apparent ayant une profondeur apparente inférieure à celle du premier plan d'affichage apparent sans masquer la vue de l'utilisateur de l'infographie du compteur.

2. Système selon la revendication 1, dans lequel l'unité de commande électronique est programmée pour positionner les infographies associées à des paramètres de priorité plus élevée vers l'avant apparent du tableau de bord 3D.

3. Système tel que revendiqué dans l'une quelconque des revendications précédentes, dans lequel des infographies de priorité plus élevée sont affichées dans un ou plusieurs plans apparents plus proches de l'utilisateur que le premier plan d'affichage apparent.

4. Système tel que revendiqué dans toute revendication précédente, dans lequel le paramètre critique se rapporte à
un ou plusieurs des éléments suivants : un avertissement de pression des pneus, un avertissement d'ABS défectueux et un avertissement de mauvais fonctionnement du moteur.

5. Véhicule automobile comportant un système tel que décrit dans l'une ou l'autre des revendications précédentes.

6. Véhicule à moteur selon la revendication 5, des moyens supplémentaires pour envoyer des informations d'avertissement à l'unité de commande électronique pour identifier lequel d'une pluralité de paramètres critiques est défectueux ou ne satisfait pas à une valeur ou plage de valeurs prédéterminée.

7. Procédé d'affichage d'infographies associées à des paramètres d'un véhicule automobile, le procédé comprenant :
l'affichage d'infographies associées aux paramètres d'un véhicule automobile sur un tableau de bord comprenant un affichage tridimensionnel autostéréoscopique à parallaxe qui émet
la variation directionnelle de l'information de l'image pour présenter une image 3D à un utilisateur ;
définir une pluralité de plans d'affichage virtuels positionnés à différentes profondeurs apparentes dans l'aire d'affichage ; et,
la programmation d'une unité électronique pour positionner chacun des infographies à une profondeur apparente à l'intérieur de l'écran d'affichage tridimensionnel de l'instrument en fonction de leur priorité, dans laquelle une profondeur plus élevée
Les infographies de priorité sont affichées aux positions de parallaxe négatives et les infographies de priorité inférieure sont affichées aux positions de parallaxe positives,
dans laquelle une première infographie comprend un indicateur de vitesse du véhicule à moteur, et la function comprenant en outre:
programmation de l'unité de commande électronique pour positionner le premier infographique dans un premier plan d'affichage apparent,
la programmation de l'unité de commande électronique de sorte que les infographies d'un ou plusieurs paramètres critiques soient normalement affichées dans des plans d'affichage apparents ayant une profondeur apparente supérieure à celle du premier plan d'affichage apparent,
programmation de l'unité de contrôle électronique pour choisir un infographique de priorité
la plus élevée
en fonction des informations reçues par l'unité de commande électronique quant à savoir lequel de l'un ou de plusieurs des paramètres critiques est défectueux ou ne respecte pas une valeur ou une plage de valeurs prédéterminée, et
programmation de l'unité électronique pour positionner un infographique de priorité la plus
élevée dans un fichier
plan d'affichage apparent devant le premier plan d'affichage apparent ayant une profondeur apparente inférieure à celle du premier plan d'affichage apparent sans masquer la vue infographique de l'utilisateur sur l'indicateur de vitesse.

8. Procédé selon la revendication 7, comprenant en outre l'étape consistant à programmer la function pour positionner un infographique dans la position de priorité la plus élevée apparemment la plus proche de l'utilisateur en fonction des informations reçues par l'unité de commande électronique quant à savoir lequel d'une pluralité de paramètres critiques est défectueux ou ne satisfait pas à une valeur ou plage de valeurs prédéterminée, ledit infographique étant associé audit un paramètre critique.
